# EUROPEAN PATENT APPLICATION

(11) **EP 4 741 140 A1**
(43) Date of publication of application: **13.05.2026**
(21) Application number: 25213396.2
(22) Date of filing: 04.11.2025
(51) Int. Cl.: B29C 65/18, H01M 10/04, B29C 65/38, B29L 31/34, B29L 9/00, B29K 23/00

(54) **APPARATUS AND METHOD FOR SEPARATOR HEAT-SEALING AND STACKING**

(30) Priority: 07.11.2024 KR 20240157526
(71) Applicant: SAMSUNG SDI CO., LTD., Yongin-si, Gyeonggi-do 17084 (KR); Seoul National University R&DB Foundation, Seoul 08826 (KR)
(72) Inventor: KIM, Minju, 17084 Yongin-si, Gyeonggi-do (KR); KIM, Bo Hyun, 17084 Yongin-si, Gyeonggi-do (KR); JO, Jin Hyeong, 17084 Yongin-si, Gyeonggi-do (KR); AHN, Sung Hoon, 08826 Seoul (KR); KIM, Sangrul, 08826 Seoul (KR); JUNG, Minyong, 08826 Seoul (KR); LIM, Soohyun, 08826 Seoul (KR)
(74) Representative: Bardehle Pagenberg Partnerschaft mbB Patentanwälte Rechtsanwälte

(57) **Abstract**

Disclosed herein may be apparatus (100) and method for separator (11) heat-sealing and stacking. The apparatus (100) may include a continuous separator supply unit (110) configured to connect a plurality of separator rolls (111) and supply separators (11) in the form of continuous sheets, a heat-sealing unit (120) configured to heat-seal two sheets of separators (11) supplied from the continuous separator supply unit (110), an electrode plate inserting unit (130) configured to insert an electrode plate (21, 22) between the two sheets of heat-sealed separators (11), and a cutting unit (140) configured to cut the two sheets of separators (11) between which the electrode plate (21, 22) is inserted, and produce a unit pack (30).

## Description

### CROSS-REFERENCE TO RELATED APPLICATIONS

The present application claims priority to and the benefit under 35 U.S.C. § 119(a)-(d) of Korean Patent Application No. 10-2024-0157526, filed on November 7, 2024, in the Korean Intellectual Property Office, the entire disclosure of which is incorporated herein by reference.

### FIELD

The present disclosure relates to apparatus and method for separator heat-sealing and stacking, and more particularly, to apparatus and method for separator heat-sealing and stacking, in which an electrode plate comes into physical contact with a sealing portion by a guide line formed through heat sealing, thereby being automatically aligned.

### BACKGROUND

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

The herein information disclosed in this Background section is for enhancement of understanding of the background of the present disclosure, and therefore, it may contain information that does not constitute related (or prior) art.

### SUMMARY

Embodiments of the present disclosure are directed to providing apparatus and method for separator heat-sealing and stacking, in which an electrode plate comes into physical contact with a sealing portion by a guide line formed through heat sealing, thereby being automatically aligned.
According to the present invention, an apparatus and a method for separator heat-sealing and stacking as claimed in claims 1 and 9 are provided. Preferred embodiments of the invention are described in the dependent claims.

However, the technical problem to be solved by the present disclosure is not limited to the above problem, and other problems not mentioned herein, and aspects and features of the present disclosure that would address such problems, will be clearly understood by those skilled in the art from the description of the present disclosure herein.

An apparatus for separator heat-sealing and stacking according to embodiments of the present disclosure may include a continuous separator supply unit configured to connect a plurality of separator rolls and supply separators in a form of continuous sheets, a heat-sealing unit configured to heat-seal two sheets of separators supplied from the continuous separator supply unit, an electrode plate inserting unit configured to insert an electrode plate between the two sheets of heat-sealed separators, and a cutting unit configured to cut the two sheets of separators between which the electrode plate is inserted, and produce a unit pack.

In embodiments, the continuous separator supply unit may include a roller unit configured to connect the plurality of separator rolls and supply the separators in the form of continuous sheets, and a conveyor belt configured to simultaneously receive the separators from the roller unit and transfer the separators at an identical speed.

In embodiments, the heat-sealing unit may include a silicone rubber part, a heat-sealing bar provided on one side of the silicone rubber part, and a sealing motor configured to move the silicone rubber part and the heat-sealing bar upwardly or downwardly. The silicone rubber part and the heat-sealing bar may provide uniform pressure to the separators.

In embodiments, the heat-sealing unit may include a first heat-sealing unit and a second heat-sealing unit that are positioned in succession and each provided with the heat-sealing bar in different areas. The first heat-sealing unit may form a first heat-sealed area on one side of the two sheets of separators. The second heat-sealing unit may form a second heat-sealed area on another side of the two sheets of separators.

In embodiments, the heat-sealing bar may be coated with a Teflon material and prevent adhesion between the separators and the heat-sealing bar.

In embodiments, the electrode plate inserting unit may insert a first electrode plate into the first heat-sealed area, and insert a second electrode plate into the second heat-sealed area.

In embodiments, the first electrode plate and the second electrode plate may be inserted in opposite directions and aligned during the insertion by making contact with the first heat-sealed area and the second heat-sealed area, respectively.

In embodiments, the cutting unit may include a cutter configured to cut the two sheets of separators between which the electrode plate is inserted, and a cutting motor configured to move the cutter upwardly or downwardly.

In embodiments, the apparatus may include a stacking unit configured to receive and stack the produced unit pack while aligning the produced unit pack.

In embodiments, the stacking unit may include a stacking bed configured to receive the produced unit pack and inclined to allow the unit pack to slide down, a stopper configured to stop and align the slid-down unit pack, and a stacking motor configured to move the stacking bed upwardly or downwardly.

A method of separator heat-sealing and stacking according to embodiments of the present disclosure may include connecting a plurality of separator rolls through a continuous separator supply unit and supplying separators in a form of continuous sheets, heat-sealing, by a heat-sealing unit, two sheets of separators supplied from the continuous separator supply unit, inserting an electrode plate between the two sheets of heat-sealed separators by an electrode plate inserting unit, and cutting, by a cutting unit, the two sheets of separators between which the electrode plate is inserted, and producing a unit pack.

In embodiments, the supplying of the separator may include: connecting the plurality of separator rolls by a roller unit, and supplying separators in the form of continuous sheets; and simultaneously receiving the separators from the roller unit through a conveyor belt and transferring the separators at an identical speed.

In embodiments, the heat-sealing may include: providing a heat-sealing unit including a silicone rubber part, a heat-sealing bar provided on one side of the silicone rubber part, and a sealing motor configured to move the silicone rubber part and the heat-sealing bar upwardly or downwardly; and providing uniform pressure to the separators through the silicone rubber part and the heat-sealing bar.

In embodiments, the heat-sealing may include: providing the heat-sealing unit including a first heat-sealing unit and a second heat-sealing unit that are positioned in succession and each provided with the heat-sealing bar in different areas; forming a first heat-sealed area on one side of the two sheets of separators by the first heat-sealing unit; and forming a second heat-sealed area on another side of the two sheets of separators by the second heat-sealing unit.

In embodiments, the providing of the heat-sealing unit may include coating the heat-sealing bar with a Teflon material to prevent adhesion between the separators and the heat-sealing bar.

In embodiments, the inserting of the electrode plate may include inserting a first electrode plate into the first heat-sealed area, and inserting a second electrode plate into the second heat-sealed area.

In embodiments, the inserting of the electrode plate may include inserting the first electrode plate and the second electrode plate in opposite directions, and aligning the first electrode plate and the second electrode plate during the insertion by making contact with the first heat-sealed area and the second heat-sealed area, respectively.

In embodiments, the producing of the unit pack may include providing the cutting unit, including a cutter configured to cut two sheets of separators between which the electrode plate is inserted, and a cutting motor configured to move the cutter upwardly or downwardly.

In embodiments, the method may further include receiving and stacking, by a stacking unit, the produced unit pack while aligning the produced unit pack.

In embodiments, the receiving and stacking of the unit pack may include providing the stacking unit, including a stacking bed configured to receive the produced unit pack and inclined to allow the unit pack to slide down, a stopper configured to stop and align the slid-down unit pack, and a stacking motor configured to move the stacking bed upwardly or downwardly.

According to embodiments of the present disclosure, an advantage may be provided in that specific portions of a separator may be selectively heat-sealed by using a silicone rubber part and a heat-sealing bar.

Furthermore, according to embodiments of the present disclosure, when the separator is stacked on a stacking bed after being cut, the stacking bed can move upwardly or downwardly, thereby minimizing damage to the separator.

In addition, for a negative electrode plate and a positive electrode plate having different sizes, an advantage may be achieved in that multiple materials with different sizes can be precisely aligned by using guidelines with different dimensions to align the respective electrode plates.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings.
FIG. 1A is a top perspective view of a prismatic secondary battery.
FIG. 1B is a sectional view taken along line I-I' of FIG. 1A.
FIG. 2 is a view illustrating an apparatus for separator heat-sealing and stacking according to embodiments of the present disclosure.
FIG. 3 is a view illustrating a continuous separator supply unit according to embodiments of the present disclosure.
FIG. 4A is a view illustrating a heat-sealing unit of the separator heat-sealing and stacking apparatus according to embodiments of the present disclosure.
FIG. 4B is a view illustrating separators sealed by the heat-sealing unit of the separator heat-sealing and stacking apparatus according to embodiments of the present disclosure.
FIG. 5 is a view illustrating a cutting unit of the separator heat-sealing and stacking apparatus according to embodiments of the present disclosure.
FIG. 6 is a view for describing a stacking unit of the separator heat-sealing and stacking apparatus according to embodiments of the present disclosure.
FIG. 7 is a view for describing a method of aligning electrode plates by the separator heat-sealing and stacking apparatus according to embodiments of the present disclosure.
FIG. 8 is a flowchart for describing a method of separator heat-sealing and stacking according to embodiments of the present disclosure.

### DETAILED DESCRIPTION

Exemplary embodiments of the present disclosure will be described herein in detail with reference to the accompanying drawings. Prior to the description, it is noted that the terms or words used in this specification and claims should not be construed as being limited to common or dictionary meanings but instead should be understood to have meanings and concepts in agreement with the spirit of the present disclosure based on the principle that an inventor can define the concept of each term suitably in order to describe his/her own disclosure in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed herein may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

An electrode assembly for secondary batteries may be formed by inserting a positive electrode plate and a negative electrode plate between separators and stacking the inserted plates. As such, an apparatus for stacking separators and electrode plates is referred to as a stacking apparatus. Conventional stacking apparatuses have the issue of a relatively low production rate due to time consumption in a process of recognizing positions of electrode plates and aligning the electrode plates, which makes ultra-high-speed stacking impossible. Furthermore, there is an issue in that automation and high-precision stacking are difficult due to limitations in the resolution of components such as motors and cameras.

Examples of secondary batteries include a coin type, a cylindrical type, a prismatic type, and a pouch type. The present disclosure is basically applicable to a prismatic secondary battery. Therefore, the prismatic secondary battery will first be briefly described prior to description of embodiments of the present disclosure.

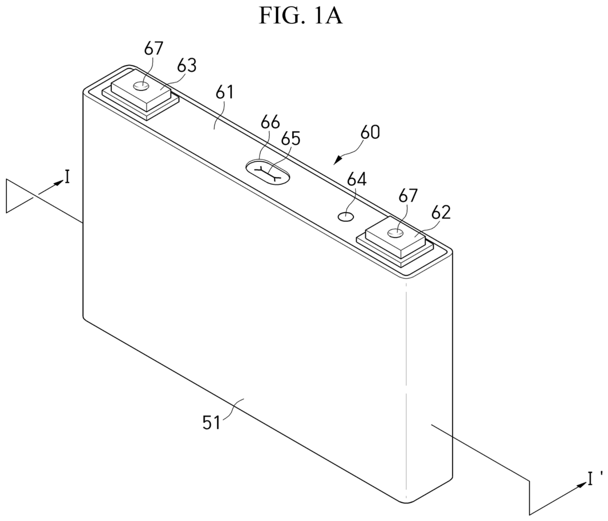

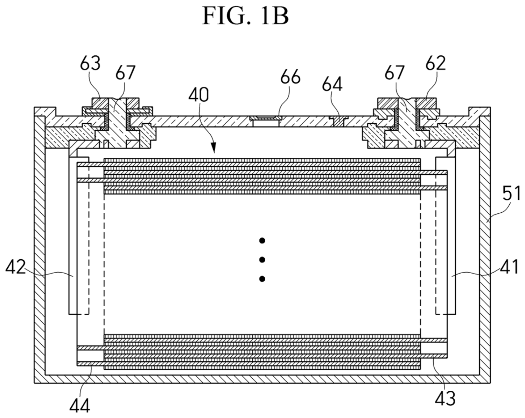

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described herein, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

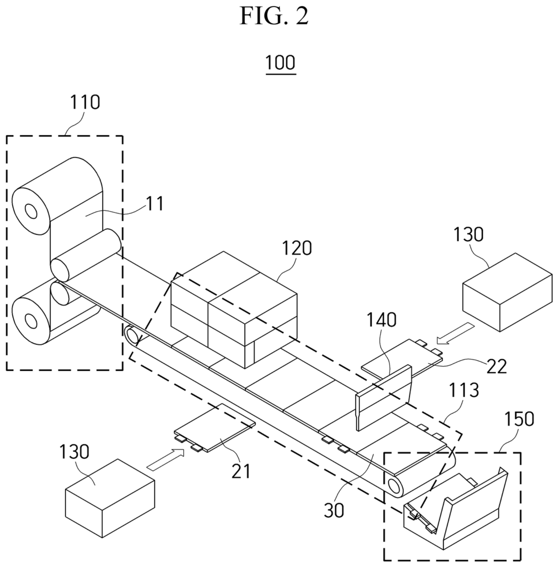

FIG. 2 is a diagram illustrating an apparatus for separator heat-sealing and stacking according to embodiments of the present disclosure.

Referring to FIG. 2, the separator heat-sealing and stacking apparatus 100 according to embodiments of the present disclosure may include a continuous separator supply unit 110, a heat-sealing unit 120, an electrode plate inserting unit 130, a cutting unit 140, and a stacking unit 150.

The separator heat-sealing and stacking apparatus 100 according to embodiments of the present disclosure may stack rolled separators and individual electrode plates.

The continuous separator supply unit 110 may connect a plurality of separator rolls and supply separators 11 in the form of continuous sheets.

The heat-sealing unit 120 may heat seal two sheets of separators 11 supplied from the continuous separator supply unit 110.

The electrode plate inserting unit 130 may insert each electrode plate 21 and 22 between the two sheets of heat-sealed separators 11.

The cutting unit 140 may cut the two sheets of separators 11 between which each of the electrode plates 21 and 22 is inserted, thereby producing unit packs 30.

The stacking unit 150 may receive and stack the produced unit packs 30 while aligning the produced unit packs 30.

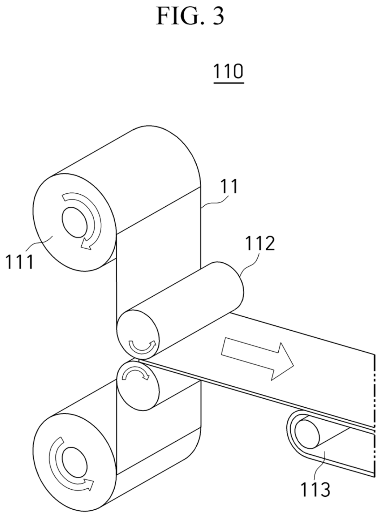

Hereinafter, a detailed configuration of the separator heat-sealing and stacking apparatus according to embodiments of the present disclosure will be described with reference to FIGS. 3 to 5.

FIG. 3 is a view illustrating the continuous separator supply unit of the separator heat-sealing and stacking apparatus according to embodiments of the present disclosure.

Referring to FIG. 3, the continuous separator supply unit 110 may include a roller unit 112 that connects a plurality of separator rolls 111 and supplies separators 11 in the form of continuous sheets, and may also include a conveyor belt 113 that receives the separators 11 simultaneously from the roller unit 112 and transfers the separators 11 at the same speed. In embodiments, the roller unit 112 may include two rollers, and may receive the separators 11 from the two separator rolls 111 and supply the separators 11 to the heat-sealing unit 120, which is a subsequent device, through the conveyor belt 113.

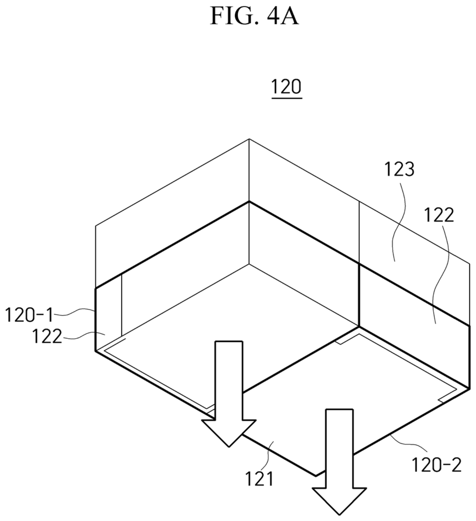

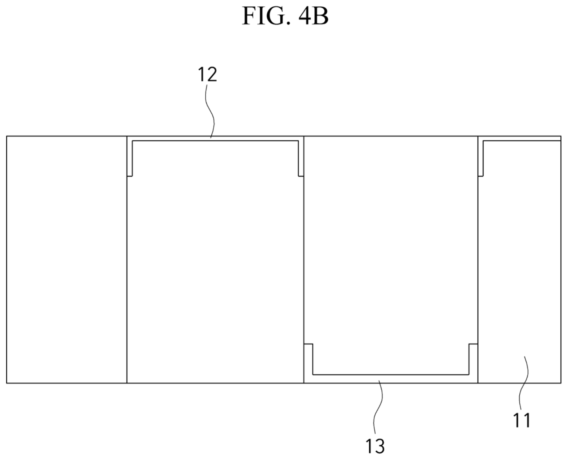

FIG. 4A is a view illustrating the heat-sealing unit of the separator heat-sealing and stacking apparatus according to embodiments of the present disclosure, and FIG. 4B is a view illustrating separators sealed by the heat-sealing unit of the separator heat-sealing and stacking apparatus according to embodiments of the present disclosure.

Referring to FIG. 4A, the heat-sealing unit 120 may heat seal two sheets of separators 11 supplied from the continuous separator supply unit 110, and may include a silicone rubber part 121, a heat-sealing bar 122, and a sealing motor 123.

In embodiments, the heat-sealing bar 122 may be provided on one side of the silicone rubber part 121. The sealing motor 123 may move the silicone rubber part 121 and the heat-sealing bar 122 upwardly or downwardly.

Furthermore, the heat-sealing unit 120 may include a control circuit (not illustrated) that controls voltage or current supplied to the heat-sealing bar 122, and may momentarily apply high-temperature heat to the heat-sealing bar 122 using a Joule heating principle by passing impulse current to the heat-sealing bar 122, thereby melting thermoplastic polymer components in the separators 11.

Furthermore, the silicone rubber part 121 and the heat-sealing bar 122 may provide uniform pressure to the separators. The heat-sealing bar 122 may be coated with a Teflon material to prevent adhesion between the separators 11 and the heat-sealing bar 122.

Subsequently, as the impulse current signal ends and cooling begins, the melted thermoplastic polymer components of the separators 11 may fuse together, allowing the two sheets of separators to be joined into a single layer.

Here, during the cooling process, pressure may be applied to the heat-sealing bar 122 and the silicone rubber part 121 to perform cooling through conduction. The cooling may be performed in a short time of one second or less, thereby enabling ultra-fast separator heat-sealing.

In embodiments, the heat-sealing unit 120 may include a first heat-sealing unit 120-1 and a second heat-sealing unit 120-2 that are positioned in succession and each equipped with the heat-sealing bar 122 located in different areas. As illustrated in FIG. 3B, the first heat-sealing unit 120-1 may form a first heat-sealed area 12 on one side of the two sheets of separators 11, and the second heat-sealing unit 120-2 may form a second heat-sealed area 13 on an opposite side of the two sheets of separators. As such, in the heat-sealing unit 120, the first heat-sealing unit 120-1 and the second heat-sealing unit 120-2, each having the heat-sealed area located in different areas are successively provided, thereby allowing the separators 11, which are successively sealed, to have heat-sealed areas in different areas. In other words, the heat-sealing unit 120 applied to the two sheets of separators 11 that are continuously supplied on the conveyor belt 113 may selectively heat-seal specific portions of the two sheets of separators. The heat-sealed areas formed through the aforementioned process may be used as physical guide lines for subsequent alignment.

In embodiments, by setting the heat-sealing bar 122 of the first heat-sealing unit 120-1 and the heat-sealing bar 122 of the second heat-sealing unit 120-2 to be of different sizes, the first heat-sealed area 12 and the second heat-sealed area 13 may be formed to differ from each other. Accordingly, for the negative electrode plate and the positive electrode plate having different sizes, an advantage may be provided in that multiple materials with different sizes can be precisely aligned using guidelines with different dimensions to align the respective electrode plates.

Returning to FIG. 1, the electrode plate inserting unit 130 may insert the first electrode plate 21 into the first heat-sealed area 12, and insert the second electrode plate 22 into the second heat-sealed area 13. In embodiments, the first electrode plate 21 and the second electrode plate 22 may be inserted in opposite directions, and may be aligned during the insertion by making contact with the first heat-sealed area 12 and the second heat-sealed area 13, respectively. Here, the first electrode plate 21 and the second electrode plate 22 may have opposite polarities. For example, the first electrode plate 21 may be a positive electrode plate, and the second electrode plate 22 may be a negative electrode plate.

Furthermore, the electrode plate inserting unit 130 may push the first electrode plate 21 and the second electrode plate 22 into the first heat-sealed area 12 and the second heat-sealed area 13, which are guide lines formed by heat-sealing of the separators 11. In this case, to prevent damage to the heat-sealed areas 12 and 13 of the separators 11, a force less than the bonding strength should be used for insertion. At the same time, the force should be applied to make the first electrode plate 21 and the second electrode plate 22 contact the first heat-sealed area 12 and the second heat-sealed area 13, respectively, to ensure precise alignment.

As stated herein, the first heat-sealed area 12 and the second heat-sealed area 13 may be formed with different sizes by the heat-sealing unit 120. Accordingly, for the first electrode plate 21 and the second electrode plate 22, which have different sizes, the guidelines with different dimensions can be used to align the respective electrode plates, thereby enabling precise alignment of materials of different sizes.

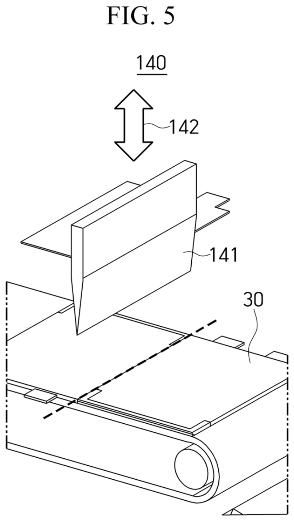

FIG. 5 is a view illustrating the cutting unit of the separator heat-sealing and stacking apparatus according to embodiments of the present disclosure.

Referring to FIG. 5, the cutting unit 140 may cut two sheets of separators 11 between which an electrode plate is inserted, thereby producing a unit pack 30. The cutting unit 140 may cut the two sheets of separators 11 between which each of the successively supplied electrode plates is inserted, thereby producing individual unit packs 30, each having a separator-electrode plate-separator form. In embodiments, the cutting unit 140 may include a cutter 141 configured to cut the two sheets of separators 11 between which an electrode plate is inserted, and a cutting motor 142 configured to move the cutter 141 upwardly or downwardly.

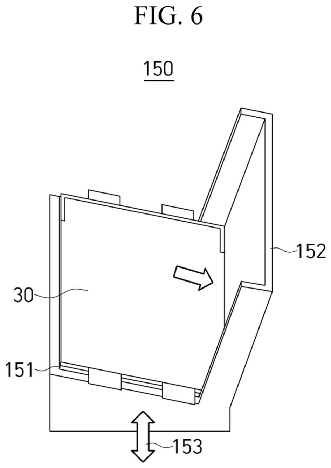

FIG. 6 is a view for describing the stacking unit of the separator heat-sealing and stacking apparatus according to embodiments of the present disclosure.

Referring to FIG. 6, the stacking unit 150 may receive and stack the produced unit packs 30 while aligning the produced unit packs 30. The stacking unit 150 may repeatedly stack the unit packs 30 that are produced by cutting the two sheets of separators 11 between which each of the electrode plates is inserted, thereby enabling the manufacture of an electrode assembly as a final product.

In embodiments, the stacking unit 150 may include a stacking bed 151 that receives the produced unit packs 30 and is inclined to allow each of the produced unit packs 30 to slide down on the stacking bed 151, a stopper 152 that stops and aligns the slid-down unit pack 30, and a stacking motor 153 that moves the stacking bed 151 upwardly or downwardly.

The stacking unit 150 may seat a supplied unit pack 30 onto the stacking bed 151, and the unit pack 30 may be automatically aligned by coming into contact with the stopper 152 by gravity. To this end, the stopper 152 may have wing portions on opposite sides to match the height of the unit pack 30. The stacking motor 153 may move the stacking bed 151 upwardly or downwardly, thus keeping the stacking bed 151 in a position to minimize damage to the unit packs 30.

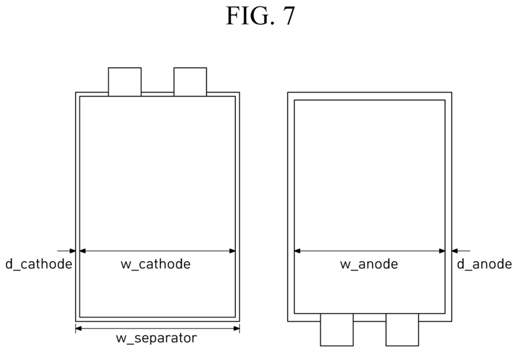

FIG. 7 is a view for describing a method of aligning electrode plates by the separator heat-sealing and stacking apparatus according to embodiments of the present disclosure.

Referring to FIG. 7, according to embodiments of the present disclosure, the first heat-sealed area 12 and the second heat-sealed area 13 that are formed through heat sealing of the separators 11 using the separator heat-sealing and stacking apparatus 100 may enable electrode plates to be automatically aligned through physical contact with the sealed portions.

As stated herein, the first heat-sealed area 12 and the second heat-sealed area 13 may be formed with different sizes by the heat-sealing unit 120. Accordingly, for the first electrode plate 21 and the second electrode plate 22, which have different sizes, guidelines with different dimensions can be used to align the respective electrode plates, thereby enabling precise alignment of materials of different sizes.

As illustrated in FIG. 7, when "d_cathode" represents the width of the heat-sealed area of the separator into which a negative electrode plate is inserted, "w_cathode" represents the width of the negative electrode plate, and "w_separator" represents the width of the separator, "w_separator" may be set to satisfy "d_cathode + w_cathode + d_cathode = w_separator". Similarly, when "d_anode" represents the width of the heat-sealed area of the separator into which a positive electrode plate is inserted, "w_anode" represents the width of the positive electrode plate, and "w_separator" represents the width of the separator, "w_separator" may be set to satisfy "d_anode+ w_anode+ d_anode = w_separator".

Ultimately, an advantage may be provided in that the negative electrode plate and the positive electrode plate are aligned at the center of the separators, thus achieving the same alignment not only in the width direction but also in the height direction. Furthermore, by setting "d_cathode" and "d-anode" to have different sizes, the positive electrode plate and the negative electrode plate, which have different sizes, may be automatically and precisely aligned.

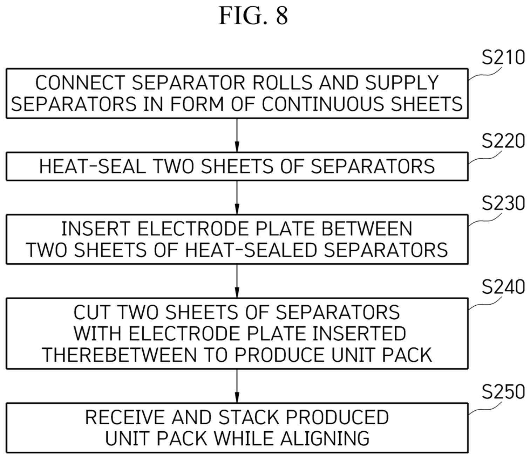

FIG. 8 is a flowchart for describing a method of separator heat-sealing and stacking according to embodiments of the present disclosure.

Referring to FIG. 8, the method of separator heat-sealing and stacking according to embodiments of the present disclosure may include steps S210 to S250.

Step S210 may be the step of connecting a plurality of separator rolls through a continuous separator supply unit and supplying separators in the form of continuous sheets. In embodiments, step S210 may include the step of connecting the plurality of separator rolls through a roller unit and supplying the separators in the form of continuous sheets, and the step of simultaneously receiving the separators from the roller unit through a conveyor belt and transferring the separators at the same speed.

Step S220 may be the step of heat-sealing, using a heat-sealing unit, the two sheets of separators supplied from the continuous separator supply unit. In embodiments, step S220 may include the step of providing a heat-sealing unit including a silicone rubber part, a heat-sealing bar provided on one side of the silicone rubber part, and a sealing motor configured to move the heat-sealing bar upwardly or downwardly, and the step of providing uniform pressure to separators through the silicone rubber part and the heat-sealing bar. Furthermore, in embodiments, step S220 may include the step of providing the heat-sealing unit including a first heat-sealing unit and a second heat-sealing unit that are positioned successively with each other and each equipped with the heat-sealing bar in different areas, the step of forming a first heat-sealed area on one side of the two sheets of separators by the first heat-sealing unit, and the step of forming a second heat-sealed area on an opposite side of the two sheets of separators by the second heat-sealing unit.

Step S230 may be the step of inserting, by an electrode plate inserting unit, electrode plates between the two sheets of separators that are heat-sealed. In embodiments, step S230 may include the step of inserting a first electrode plate into the first heat-sealed area, and the step of inserting a second electrode plate into the second heat-sealed area. Furthermore, in embodiments, step S230 may include the step of inserting the first electrode plate and the second electrode plate in opposite directions, and aligning the first electrode plate and the second electrode plate during the insertion by making contact with the first heat-sealed area and the second heat-sealed area.

Step S240 may be the step of producing unit packs by cutting the two sheets of separators, between which each of the electrode plates is inserted, using a cutting unit. In embodiments, step S240 may include the step of providing a cutter configured to cut the two sheets of separators between which each of the electrode plates is inserted, and a cutting motor configured to move the cutter upwardly or downwardly.

Step S250 may be the step of receiving and stacking the produced unit packs by a stacking unit while aligning the produced unit packs 30. In embodiments, step S250 may include the step of providing the stacking unit including a stacking bed that receives the produced unit packs and is inclined to allow each of the produced unit packs to slide down on the stacking bed, a stopper that stops and aligns the slid-down unit pack, and a stacking motor that moves the stacking bed upwardly or downwardly.

The herein-mentioned method of separator heat-sealing and stacking according to embodiments of the present disclosure has been described with reference to the flowchart shown in the drawing. For brief explanation, the method has been illustrated and described as a series of blocks, but the present disclosure is not limited to the order of the blocks. In other words, some blocks may be executed simultaneously with other blocks or in a different order from those illustrated and described in this specification, and various diverges, flow paths, block sequences may also be implemented if they give the equivalent or similar results. In addition, to implement the method described in the specification, it is also possible not to demand all blocks.

In the description with reference to FIG. 8, each step may be further divided into additional steps, or some steps may be combined as fewer steps, based on implementation embodiments of the present disclosure. Furthermore, some steps may be omitted as needed, and a sequence of steps may be changed. In addition, despite other omitted description, the description given with reference to FIGS. 1A to 7 may be applied to the description given with reference to FIG. 8. Moreover, the description provided with reference to FIG. 8 may be applied to the description provided with reference to FIGS. 1A to 7.

Hereinafter, materials which may be used in a secondary battery according to embodiments of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiaA1-bXbO2-cDc (0.90≤a≤1.8, 0≤b≤0.5, 0≤c≤0.05); LiaMn₂-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn₂GbO4 (0.90≤a≤1.8, 0.001≤b≤0.1); LiaMn1-gGgPO₄ (0.90≤a≤1.8, 0≤g≤0.5); Li(3-f)Fe₂(PO₄)3 (0≤f≤2); and LiaFePO4 (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L1 may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOx (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination of them, but the present disclosure is not limited thereto.
The organic matter and the inorganic matter may have a form in which the organic matter and the inorganic matter have been mixed in one coating layer or a form in which a coating layer including the organic matter and a coating layer including the inorganic matter have been stacked.

In the following, further preferred embodiments are described to facilitate understanding:
Embodiment 1. An apparatus for separator heat-sealing and stacking, comprising:
   a continuous separator supply unit configured to connect a plurality of separator rolls and supply separators in a form of continuous sheets;
   a heat-sealing unit configured to heat-seal two sheets of separators supplied from the continuous separator supply unit;
   an electrode plate inserting unit configured to insert an electrode plate between the two sheets of heat-sealed separators; and
   a cutting unit configured to cut the two sheets of separators between which the electrode plate is inserted, and produce a unit pack.
Embodiment 2. The apparatus of embodiment 1, wherein the continuous separator supply unit comprises:
   a roller unit configured to connect the plurality of separator rolls and supply the separators in the form of continuous sheets; and
   a conveyor belt configured to simultaneously receive the separators from the roller unit and transfer the separators at an identical speed.
Embodiment 3. The apparatus of embodiment 1 or 2, wherein the heat-sealing unit comprises:
   a silicone rubber part;
   a heat-sealing bar provided on one side of the silicone rubber part; and a sealing motor configured to move the silicone rubber part and the heat-sealing bar upwardly or downwardly,
   wherein the silicone rubber part and the heat-sealing bar provide uniform pressure to the separators.
Embodiment 4. The apparatus of embodiment 3,
   wherein the heat-sealing unit comprises a first heat-sealing unit and a second heat-sealing unit that are positioned in succession and each provided with the heat-sealing bar in different areas,
   wherein the first heat-sealing unit forms a first heat-sealed area on one side of the two sheets of separators, and
   wherein the second heat-sealing unit forms a second heat-sealed area on another side of the two sheets of separators.
Embodiment 5. The apparatus of any one of the preceding embodiments, wherein the heat-sealing bar is coated with a Teflon material and prevents adhesion between the separators and the heat-sealing bar.
Embodiment 6. The apparatus of embodiment 4 or 5, wherein the electrode plate inserting unit inserts a first electrode plate into the first heat-sealed area, and inserts a second electrode plate into the second heat-sealed area.
Embodiment 7. The apparatus of embodiment 6, wherein the first electrode plate and the second electrode plate are inserted in opposite directions and aligned during the insertion by making contact with the first heat-sealed area and the second heat-sealed area, respectively.
Embodiment 8. The apparatus of any one of the preceding embodiments, wherein the cutting unit comprises:
   a cutter configured to cut the two sheets of separators between which the electrode plate is inserted; and
   a cutting motor configured to move the cutter upwardly or downwardly.
Embodiment 9. The apparatus of any one of the preceding embodiments, further comprising a stacking unit configured to receive and stack the produced unit pack while aligning the produced unit pack.
Embodiment 10. The apparatus of embodiment 9, wherein the stacking unit comprises:
   a stacking bed configured to receive the produced unit pack and inclined to allow the unit pack to slide down;
   a stopper configured to stop and align the slid-down unit pack; and
   a stacking motor configured to move the stacking bed upwardly or downwardly.
Embodiment 11. A method of separator heat-sealing and stacking, comprising: connecting a plurality of separator rolls through a continuous separator supply unit and supplying separators in a form of continuous sheets;
   heat-sealing, by a heat-sealing unit, two sheets of separators supplied from the continuous separator supply unit;
   inserting an electrode plate between the two sheets of heat-sealed separators by an electrode plate inserting unit; and
   cutting, by a cutting unit, the two sheets of separators between which the electrode plate is inserted, and producing a unit pack.
Embodiment 12. The method of embodiment 11, wherein the supplying of the separator comprises:
   connecting the plurality of separator rolls by a roller unit, and supplying separators in the form of continuous sheets; and
   simultaneously receiving the separators from the roller unit through a conveyor belt and transferring the separators at an identical speed.
Embodiment 13. The method of embodiments 11 or 12, wherein the heat-sealing comprises:
   providing a heat-sealing unit comprising a silicone rubber part; a heat-sealing bar provided on one side of the silicone rubber part; and a sealing motor configured to move the silicone rubber part and the heat-sealing bar upwardly or downwardly; and
   providing uniform pressure to the separators through the silicone rubber part and the heat-sealing bar.
Embodiment 14. The method of embodiment 13, wherein the heat-sealing comprises:
   providing the heat-sealing unit comprising a first heat-sealing unit and a second heat-sealing unit that are positioned in succession and each provided with the heat-sealing bar in different areas;
   forming a first heat-sealed area on one side of the two sheets of separators by the first heat-sealing unit; and
   forming a second heat-sealed area on another side of the two sheets of separators by the second heat-sealing unit.
Embodiment 15. The method of embodiments 13 or 14, wherein the providing of the heat-sealing unit comprises coating the heat-sealing bar with a Teflon material to prevent adhesion between the separators and the heat-sealing bar.
Embodiment 16. The method of embodiments 14 or 15, wherein the inserting of the electrode plate comprises:
   inserting a first electrode plate into the first heat-sealed area; and
   inserting a second electrode plate into the second heat-sealed area.
Embodiment 17. The method of embodiment 16, wherein the inserting of the electrode plate comprises inserting the first electrode plate and the second electrode plate in opposite directions, and aligning the first electrode plate and the second electrode plate during the insertion by making contact with the first heat-sealed area and the second heat-sealed area, respectively.
Embodiment 18. The method of any one of the preceding embodiments 11 to 17, wherein the producing of the unit pack comprises providing the cutting unit, comprising: a cutter configured to cut two sheets of separators between which the electrode plate is inserted; and a cutting motor configured to move the cutter upwardly or downwardly.
Embodiment 19. The method of any one of the preceding embodiments 11 to 18, further comprising receiving and stacking, by a stacking unit, the produced unit pack while aligning the produced unit pack.
Embodiment 20. The method of embodiment 19, wherein the receiving and stacking of the unit pack comprises providing the stacking unit, comprising: a stacking bed configured to receive the produced unit pack and inclined to allow the unit pack to slide down; a stopper configured to stop and align the slid-down unit pack; and a stacking motor configured to move the stacking bed upwardly or downwardly.

## Claims

1. An apparatus (100) for separator (11) heat-sealing and stacking, comprising:
a continuous separator supply unit (110) configured to connect a plurality of separator rolls (111) and supply separators (11) in a form of continuous sheets;
a heat-sealing unit (120) configured to heat-seal two sheets of separators (11) supplied from the continuous separator supply unit (110);
an electrode plate inserting unit (130) configured to insert an electrode plate (21, 22) between the two sheets of heat-sealed separators (11); and
a cutting unit (140) configured to cut the two sheets of separators (11) between which the electrode plate (21, 22) is inserted, and produce a unit pack (30).

2. The apparatus (100) as claimed in claim 1, wherein the continuous separator supply unit (110) comprises:
a roller unit (112) configured to connect the plurality of separator rolls (111) and supply the separators (11) in the form of continuous sheets; and
a conveyor belt (113) configured to simultaneously receive the separators (11) from the roller unit (112) and transfer the separators (11) at an identical speed.

3. The apparatus (100) as claimed in claim 1 or 2, wherein the heat-sealing unit (120) comprises:
a silicone rubber part (121);
a heat-sealing bar (122) provided on one side of the silicone rubber part (121); and
a sealing motor (123) configured to move the silicone rubber part (121) and the heat-sealing bar (122) upwardly or downwardly,
wherein the silicone rubber part (121) and the heat-sealing bar (122) provide uniform pressure to the separators (11).

4. The apparatus (100) as claimed in claim 3,
wherein the heat-sealing unit (120) comprises a first heat-sealing unit and a second heat-sealing unit that are positioned in succession and each provided with the heat-sealing bar (122) in different areas,
wherein the first heat-sealing unit forms a first heat-sealed area (12) on one side of the two sheets of separators (11), and
wherein the second heat-sealing unit forms a second heat-sealed area (13) on another side of the two sheets of separators (11).

5. The apparatus (100) as claimed in claim 3 or 4, wherein the heat-sealing bar (122) is coated with a Teflon material and prevents adhesion between the separators (11) and the heat-sealing bar (122).

6. The apparatus (100) of any one of the preceding claims when combined with claim 4, wherein the electrode plate inserting unit (130) inserts a first electrode plate (21) into the first heat-sealed area (12), and inserts a second electrode plate (22) into the second heat-sealed area (13), wherein preferably the first electrode plate (21) and the second electrode plate (22) are inserted in opposite directions and aligned during the insertion by making contact with the first heat-sealed area (12) and the second heat-sealed area (13), respectively.

7. The apparatus (100) as claimed in any one of the preceding claims, wherein the cutting unit (140) comprises:
a cutter (141) configured to cut the two sheets of separators (11) between which the electrode plate (21, 22) is inserted; and
a cutting motor (142) configured to move the cutter (141) upwardly or downwardly.

8. The apparatus (100) as claimed in any one of the preceding claims, further comprising a stacking unit (150) configured to receive and stack the produced unit pack while aligning the produced unit pack, wherein preferably the stacking unit (150) comprises:
a stacking bed (151) configured to receive the produced unit pack and inclined to allow the unit pack (30) to slide down;
a stopper (152) configured to stop and align the slid-down unit pack; and
a stacking motor (153) configured to move the stacking bed (151) upwardly or downwardly.

9. A method of separator (11) heat-sealing and stacking, comprising:
connecting a plurality of separator rolls (111) through a continuous separator supply unit (110) and supplying separators (11) in a form of continuous sheets;
heat-sealing, by a heat-sealing unit (120), two sheets of separators (11) supplied from the continuous separator supply unit (110);
inserting an electrode plate (21, 22) between the two sheets of heat-sealed separators (11) by an electrode plate inserting unit (130); and
cutting, by a cutting unit (140), the two sheets of separators (11) between which the electrode plate (21, 22) is inserted, and producing a unit pack (30).

10. The method as claimed in claim 9, wherein the supplying of the separator (11) comprises:
connecting the plurality of separator rolls (111) by a roller unit (112), and supplying separators (11) in the form of continuous sheets; and
simultaneously receiving the separators (11) from the roller unit (112) through a conveyor belt (113) and transferring the separators (11) at an identical speed.

11. The method as claimed in claim 9 or 10, wherein the heat-sealing comprises:
providing a heat-sealing unit (120) comprising a silicone rubber part (121); a heat-sealing bar (122) provided on one side of the silicone rubber part (121); and a sealing motor (123) configured to move the silicone rubber part (121) and the heat-sealing bar (122) upwardly or downwardly; and
providing uniform pressure to the separators (11) through the silicone rubber part (121) and the heat-sealing bar (122).

12. The method as claimed in claim 11, wherein the heat-sealing comprises:
providing the heat-sealing unit (120) comprising a first heat-sealing unit and a second heat-sealing unit that are positioned in succession and each provided with the heat-sealing bar (122) in different areas;
forming a first heat-sealed area (12) on one side of the two sheets of separators (11) by the first heat-sealing unit; and
forming a second heat-sealed area (13) on another side of the two sheets of separators (11) by the second heat-sealing unit.

13. The method as claimed in claim 11 or 12, wherein the providing of the heat-sealing unit (120) comprises coating the heat-sealing bar (122) with a Teflon material to prevent adhesion between the separators (11) and the heat-sealing bar (122).

14. The method as claimed in claim 12 or 13, wherein the inserting of the electrode plate (21, 22) comprises:
inserting a first electrode plate (21) into the first heat-sealed area (12); and
inserting a second electrode plate (22) into the second heat-sealed area (13),
wherein preferably the inserting of the electrode plate (21, 22) comprises inserting the first electrode plate (21) and the second electrode plate (22) in opposite directions, and aligning the first electrode plate (21) and the second electrode plate (22) during the insertion by making contact with the first heat-sealed area (12) and the second heat-sealed area (13), respectively.

15. The method as claimed in any one of claims 9 to 14, further comprising receiving and stacking, by a stacking unit (150), the produced unit pack while aligning the produced unit pack,
wherein preferably the receiving and stacking of the unit pack (30) comprises providing the stacking unit (150), comprising: a stacking bed (151) configured to receive the produced unit pack and inclined to allow the unit pack (30) to slide down; a stopper (152) configured to stop and align the slid-down unit pack; and a stacking motor (153) configured to move the stacking bed (151) upwardly or downwardly.
